# EUROPÄISCHE PATENTSCHRIFT

(11) **EP 2 546 135 B1**
(45) Veröffentlichungstag und Bekanntmachung des Hinweises auf die Patenterteilung: **14.11.2018**
(21) Anmeldenummer: 12005012.5
(22) Anmeldetag: 06.07.2012
(51) Int. Cl.: B62M 9/10

(54) **ANTREIBER ZUR ANBRINGUNG EINER MEHRFACH-RITZELANORDNUNG FÜR EINE FAHRRADSCHALTUNG MIT KLEINEN RITZELN**
DRIVER FOR APPLYING A MULTI-GEAR PINION ASSEMBLY FOR A BICYCLE GEARING SYSTEM WITH SMALL PINIONS
ENTRAÎNEMENT POUR L'APPLICATION D'UNE DISPOSITION DE PLUSIEURS PIGNONS POUR UN AGENCEMENT DE VITESSES DE VÉLO À PETITS PIGNONS

(30) Priorität: 13.07.2011 DE 102011107162; 03.04.2012 DE 102012006771
(43) Veröffentlichungstag der Anmeldung: 16.01.2013
(73) Patentinhaber: SRAM Deutschland GmbH, 97424 Schweinfurt (DE)
(72) Erfinder: Braedt, Henrik, 97218 Gerbrunn (DE)

(56) Entgegenhaltungen:
- EP-B1- 1 342 657
- DE-U1- 9 408 910
- TW-A- 200 938 431
- US-A- 5 480 357

## Beschreibung

Die vorliegende Erfindung betrifft einen Antreiber zur Anbringung einer Mehrfach-Ritzelanordnung mit einer Mehrzahl von Ritzeln mit unterschiedlichen Zähnezahlen zur Montage an einer Hinterradachse eines Fahrrads. Die vorliegende Erfindung betrifft insbesondere einen Antreiber für eine Mehrfach-Ritzelanordnung, umfassend eine Ritzelbaugruppe, an der zumindest ein Teil der Mehrzahl der Ritzel vorgesehen ist, wobei der Antreiber mit der Ritzelbaugruppe drehmomentübertragend verbunden oder verbindbar ist, und einen Adapter, der mit dem Antreiber koppelbar ist, wobei die Ritzelbaugruppe auch Ritzel umfassen kann, die einen kleineren Innendurchmesser oder Fußkreis als der Außendurchmesser des Antreibers aufweisen, und wobei die Ritzelbaugruppe im Bereich der durchmesserkleineren Ritzel über den Adapter mit dem Antreiber verbindbar ist. Die Erfindung betrifft ferner einen entsprechenden Adapter und auch eine Hinterradachsanordnung für ein Fahrrad.

Im Stand der Technik sind verschiedene Systeme zur Anbringung von Mehrfach-Ritzelanordnungen für Fahrradschaltungen an Hinterradachsen bekannt. Bei einem weit verbreiteten System ist ein Antreiber über eine Lageranordnung drehbar auf der Hinterradachse eines Fahrrads gelagert. Der Antreiber steht über eine Freilaufkupplung mit der Nabenhülse in drehmomentübertragendem Eingriff und lässt eine Drehmomentübertragung in der einen Drehrichtung (Antriebsrichtung) zu, wohingegen er in der anderen Richtung von der Nabenhülse drehentkoppelt ist, um einen Freilauf bereitzustellen. Üblicherweise wird ein derartiger Antreiber an seiner Außenumfangsfläche mit einer Keilnutverzahnung oder einem vergleichbaren Profil versehen, um hierauf einzelne Ritzel oder eine Baugruppe bestehend aus mehreren Ritzeln drehmomentübertragend anbringen zu können. Eine derartige Lösung ist beispielsweise im Stand der Technik in dem Dokument DE 199 15 436 A1 gezeigt. Vergleichbare Lösungen sind ferner in den Dokumenten JP 59-165293, GB 2 177 628 A oder EP 0 277 576 A2 gezeigt.

Dokument DE 94 08 910 U1 stellt ebenfalls den bekannten Stand der Technik dar. Eine weit verbreitete Lösung ist in dem Dokument EP 1 342 657 B1 beschrieben. Dieses Dokument wird als nächstkommender Stand der Technik für den Gegenstand des Anspruchs 1 angesehen. Es zeigt auch eine Möglichkeit, um durchmesserkleinere Ritzel an einem verhältnismäßig massiv ausgebildeten Antreiber anzubringen.

Obgleich dieses System weit verbreitet ist, stößt es zunehmend an seine Grenzen und weist erhebliche Nachteile auf. So wird gerade bei hochentwickelten Fahrradschaltungen, wie sie zwischenzeitlich sowohl im professionellen Radsport als auch bei Freizeitsportlern eingesetzt werden, die Anzahl der Ritzel immer größer. Dabei kommen zum Teil relativ große Abstufungen aber insbesondere auch relativ enge Abstufungen zum Einsatz, um beispielsweise eine optimale Übersetzung beim Befahren von flachem Terrain oder bei Fahrten in der Gruppe mit konstanter Trittfrequenz zu ermöglichen. In beiden Fällen, d.h. dann, wenn enge Abstufungen mit kleinen Übersetzungssprüngen vorgesehen sind, oder dann, wenn große Übersetzungssprünge bereitgestellt werden sollen, besteht ein zunehmender Bedarf an sehr kleinen Ritzeln, d.h. Ritzeln mit 10 Zähnen oder weniger. Derartig kleine Ritzel lassen sich aber nicht mehr auf einem Antreiber der herkömmlichen Art montieren, so dass Hilfskonstruktionen erforderlich sind, die meist zusätzliche Teile benötigen und deshalb kompliziert aufgebaut sowie schwer zu montieren sind. Gerade für die durchmesserkleineren Ritzel sind verhältnismäßig aufwändige Mitnahmeprofile erforderlich. Insgesamt ergibt sich gerade bei der in diesem Stand der Technik gezeigten Adapterlösung das Problem, dass eine Vielzahl von verschiedenen Teilen erforderlich ist, die kompliziert zu montieren sind und verhältnismäßig viel Gewicht mit sich bringen.

Ein weiterer Nachteil dieser Lösung aus dem Stand der Technik besteht auch darin, dass gerade wegen der mehrteiligen Anordnung das äußere Lager in axialer Richtung weiter innen im Inneren des Antreibers angeordnet werden muss. Dies bedeutet, dass gerade dann, wenn die Kette auf dem kleinsten Ritzel aufliegt, ein verhältnismäßig großer axialer Abstand zwischen dem Ort des Ketteneingriffs und damit dem Ort der Kraftübertragung und dem Lager besteht. Dadurch kommt es zu unerwünschten mechanischen Spannungszuständen und zu einem ungünstigen Kraftfluss.

Es ist eine Aufgabe der vorliegenden Erfindung, einen Antreiber für eine Mehrfach-Ritzelanordnung der eingangs bezeichneten Art, einen Adapter sowie und eine hiermit ausgebildete Hinterrad-Achsanordnung bereitzustellen, die den vorstehend geschilderten Problemen Rechnung tragen und die bei erheblich vereinfachtem Aufbau mit deutlich reduziertem Gewicht ausgebildet werden können.

Diese Aufgabe wird durch einen Antreiber für eine Mehrfach-Ritzelanordnung mit den Merkmalen des Anspruchs 1 gelöst.

Anders als beim Stand der Technik, bei dem sämtliche Ritzel in der Regel mittelbar oder unmittelbar über ein entsprechendes Außenverzahnungsprofil am Antreiber angreifen, wurde bei der vorliegenden Erfindung erkannt, dass nicht der gesamte Antreiber mit einer entsprechenden Außenverzahnung versehen werden muss, sondern dass auch Abschnitte im Außenbereich des Antreibers dazu genutzt werden können, um den Adapter zur Anbringung der Ritzelbaugruppe zumindest axial zu fixieren. Die Drehmomentübertragung zwischen Ritzelbaugruppe und Antreiber kann auch räumlich getrennt von dem Kopplungsabschnitt erfolgen. Der Adapter dient vorzugsweise allein zur Fixierung der Ritzelbaugruppe in axialer und radialer Richtung. Dies hat den Vorteil, dass die zur Drehmomentübertragung genutzten Abschnitte der Ritzelbaugruppe speziell hierauf ausgelegt werden können und die zur axialen und radialen Fixierung über den Adapter genutzten Abschnitte entsprechend auf die Anforderungen bei der axialen Fixierung abgestimmt werden können.

Darüber hinaus steigt die Variabilität für die Verwendung verschiedener Ritzelbaugruppen durch die jeweilige Anpassung des Adapters. Eine entsprechende Ritzelbaugruppe braucht nur noch mit dem geeigneten Drehmomentübertragungsabschnitt versehen zu werden und kann dann mit einem entsprechend auf die Ritzelbaugruppe abgestimmten Adapter axial fixiert werden, wobei der Adapter an den dafür vorgesehenen Bereichen des Antreibers angreift. Dies erlaubt es, auch Ritzelbaugruppen mit sehr kleinen Ritzeln zu verwenden, die mit herkömmlichen Antreibern überhaupt nicht oder nur unter erheblichem technischem Aufwand kombiniert werden können.

Die Erfindung betrifft insbesondere einen Antreiber zur Montage an einer Hinterradachse eines Fahrrads, wobei der Antreiber zur Anbringung der Ritzelbaugruppe ausgebildet ist, an der eine Mehrzahl von Ritzeln mit unterschiedlichen Zähnezahlen vorgesehen ist, wobei der Antreiber umfasst:
- eine Drehmomentaufnahmeformation zum drehmomentübertragenden Koppeln mit der Ritzelbaugruppe,
- einen Positionierungsabschnitt zum Positionieren der Ritzelbaugruppe in radialer Richtung,
- eine Außengewindeformation, auf die ein Adapter zum axialen Fixieren der Ritzelbaugruppe aufschraubbar ist, und
- eine Abtriebsformation zum Übertragen eines Drehmoments auf eine Nabenanordnung einer Hinterradachse eines Fahrrads,
wobei sich zwischen der Drehmomentaufnahmeformation und dem Positionierungsabschnitt die Außengewindeformation erstreckt.

Diese Gestaltung bietet vielerlei Vorteile, insbesondere eine kompakte Ausgestaltung bei einfacher Fertigung und geringem Gewicht.

Eine Weiterbildung der Erfindung sieht einen Führungsabschnitt vor, der zwischen der Drehmomentaufnahmeformation und dem Positionierungsabschnitt angeordnet ist, bevorzugt benachbart zu der Außengewindeformation. Der Führungsabschnitt muss keine Kräfte oder Momente und auch keine Zugspannungen übertragen und kann deshalb mit relativ geringer Wandstärke und damit leichtgewichtig ausgeführt werden. Ein Vorteil dieser Gestaltung liegt darin, dass der Führungsabschnitt eine zuverlässige und fehlerfreie Montage des Adapters auf dem Antreiber ermöglicht. Der Führungsabschnitt führt den Adapter beim Aufschrauben auf der Außengewindeformation und verhindert, dass der Adapter verkantet und fehlerhaft aufgeschraubt wird, wobei möglicherweise die Außengewindeformation oder die dem Adapter zugeordnete korrespondierende Innengewindeformation beschädigt oder zerstört wird.

Die Außengewindeformation kann nahe der Drehmomentaufnahmeformation angeordnet werden, so dass diejenigen Bereiche, in denen Momente und Zugspannungen auftreten, lokal konzentriert sind und der Antreiber in diesen mechanisch belasteten Bereichen entsprechend massiv ausgebildet werden kann. Die übrigen weniger stark belasteten Bereiche lassen sich entsprechend leichtgewichtiger ausbilden.

Eine Weiterbildung des erfindungsgemäßen Antreibers sieht einen axialen Anschlag für die Ritzelbaugruppe vor, der benachbart zu der Drehmomentaufnahmeformation ausgebildet ist. Wiederum gilt, dass auch dieser zur Kraftübertragung dienende Anschlag in unmittelbarer räumlicher Nähe zu der Außengewindeformation und der Drehmomentaufnahmeformation angeordnet werden kann, so dass die auftretenden Kräfte und Momente lokal konzentriert werden können.

Hinsichtlich des Zieles, eine besonders kompakte Ausgestaltung zu erreichen, sieht eine Weiterbildung des erfindungsgemäßen Antreibers vor, dass sich die Drehmomentaufnahmeformation lediglich über einen Teilabschnitt der axialen Länge des Antreibers zwischen dem axialen Anschlag und dem freien Ende des Positionierungsabschnitts erstreckt, vorzugsweise über einen Teilabschnitt der kleiner ist als ein Viertel, besonders bevorzugt kleiner ist als ein Fünftel dieser axialen Länge des Antreibers. Es hat sich gezeigt, dass sich die Drehmomentaufnahmeformation, die als drehmomentübertragendes Mitnahmeprofil für die Ritzelanordnung dient, nicht über die gesamte oder einen Großteil der Länge des Antreiber erstrecken muss, sondern dass es ausreicht, dass die Drehmomentübertragung in einem entsprechend massiv ausgebildeten kleinen axialen Bereich stattfindet. In diesem Zusammenhang kann vorgesehen sein, dass der Teilabschnitt im Wesentlichen der axialen Länge der korrespondierenden Drehmomentübertragungsformation der Ritzelbaugruppe entspricht.

Eine Weiterbildung des erfindungsgemäßen Antreibers sieht vor, dass die Außengewindeformation unmittelbar an die Drehmomentaufnahmeformation angrenzt. Dadurch können Axialkräfte, die zwischen dem Anschlag und der zur Verspannung mit dem Adapter dienenden Außengewindeformation auftreten, auf einen relativ kurzen axialen Abschnitt konzentriert werden, statt diese über einen längeren Axialabschnitt zu übertragen. Darüber hinaus bietet diese Anordnung der Außengewindeformation den Vorteil, dass Lagerflächen oder Abschnitte, in denen Lager untergebracht werden müssen, nicht in axialer Überlappung mit der Außengewindeformation gelangen. Sie bleiben also von der Außengewindeformation unbeeinflusst.

Eine Weiterbildung des erfindungsgemäßen Antreibers sieht vor, dass der Führungsabschnitt von einer, geschlossenen oder mit Öffnungen zur Gewichtseinsparung versehenen, im Wesentlichen zylindrischen oder leicht konischen Außenoberfläche gebildet ist. Die erfindungsgemäße Ausgestaltung des Antreibers lässt es also zu, den Führungsabschnitt speziell für seine Aufgabe zur Führung des Adapters bei dessen Montage auszugestalten, um so eine fehlerhafte Montage zu vermeiden, bei der beispielsweise die Außengewindeformation am Antreiber oder die korrespondierende Gewindeformation am Adapter beschädigt werden. Insgesamt lässt sich durch Verwendung des Führungsabschnitts ein optimales Positionierungsergebnis der Ritzelbaugruppe am Antreiber erreichen.

In diesem Zusammenhang kann ferner vorgesehen sein, dass der Führungsabschnitt einen kleineren maximalen Außendurchmesser aufweist, als die Drehmomentaufnahmeformation und die Außengewindeformation. Ferner kann vorgesehen sein, dass an einem von der Drehmomentaufnahmeformation fernen Ende der Positionierungsabschnitt vorgesehen ist, der mit einem kleineren Außendurchmesser ausgebildet ist, als der Außendurchmesser des Führungsabschnitts. Ein solcher in seinem Außendurchmesser reduzierter Führungsabschnitt bietet den Vorteil, dass auch sehr kleine Ritzel an der Mehrfach-Ritzelanordnung vorgesehen werden können, was bei herkömmlichen Antreibern häufig problematisch ist. Dabei ist es möglich, dass der in seinem Außendurchmesser reduzierte Führungsabschnitt zum Aufnehmen eines Lagers ausgebildet ist. Um die Möglichkeit zu schaffen, größere Lager zur Aufnahme größerer Lasten unterzubringen, sieht eine Weiterbildung der Erfindung vor, dass an einem von der Drehmomentaufnahmeformation fernen Ende ein vergrößerter Innendurchmesserabschnitt ausgebildet ist.

Eine besondere Ausführungsvariante der Erfindung sieht vor, dass der Positionierungsabschnitt einen aus dem Antreiber axial vorstehenden Teilabschnitt der Außenumfangsfläche des Lagers umfasst oder von diesem gebildet wird. Mit anderen Worten kann also vorgesehen sein, dass der Antreiber an seinem der Drehmomentaufnahmeformation fernen Ende mit einem Innendurchmesserabschnitt zum Aufnehmen des Lagers ausgebildet ist, der so groß ausgebildet ist, dass im Vergleich zu anderen Ausführungsformen ein am Antreiber integral ausgebildeter Positionierungsabschnitt ganz wegfällt. Das im Antreiber teilweise aufgenommene und teilweise von diesem axial vorstehende Lager bildet mit seiner äußeren Lagerschale einen vorspringenden Abschnitt, der dann als Positionierungsabschnitt genutzt wird. Dies hat den Vorteil, dass die präzise gefertigte Außenoberfläche der äußeren Lagerschale des teilweise aus dem Antreiber vorstehenden Lagers als geometrisch exakt ausgebildeter Positionierungsabschnitt verwendet werden kann.

Hinsichtlich der Lageanordnung kann ferner vorgesehen sein, dass der Antreiber an seinem der Drehmomentaufnahmeformation nahen Ende mit einem Innendurchmesserabschnitt zum Aufnehmen eines Lagers ausgebildet ist.

Eine Weiterbildung der Erfindung sieht vor, dass die Ritzelbaugruppe als zusammenhängende Baugruppe vormontierbar und über den Adapter mit dem Antreiber verspannbar ist, wobei der Adapter mit dem ersten Kopplungsabschnitt ausgebildet ist, über den er an dem Antreiber anbringbar ist, und mit einem zweiten Kopplungsabschnitt ausgebildet ist, mit dem er mit der vormontierten Ritzelbaugruppe gekoppelt oder koppelbar ist.

In Abweichung vom Stand der Technik hat diese erfindungsgemäße Weiterbildung den wesentlichen Vorteil, dass die Ritzelbaugruppe als zusammenhängende Baugruppe vormontierbar und somit bei der Montage als Ganzes einfacher handhabbar ist. Auch dadurch lässt sich der Adapter erheblich vereinfachen. Der Adapter kann dann so ausgestaltet werden, dass er nicht einzelne Ritzel oder eine Unterbaugruppe von einzelnen Ritzeln aufnehmen und tragend lagern muss. Stattdessen ist der Adapter so ausgeführt, dass er lediglich die Funktion der vornehmlich axialen (und ggfs. auch radialen) Fixierung der Ritzelbaugruppe an dem Antreiber gewährleistet. Da die Ritzelbaugruppe sozusagen selbsttragend ist, muss sie nicht zusätzlich über den Adapter relativ zum Antreiber gestützt werden, wie dies beim Stand der Technik bei Systemen der Fall ist, die das Zusammensetzen und Fixieren einzelner Ritzel oder Ritzelgruppen erfordern. Es versteht sich, dass im Rahmen der Erfindung vorteilhafterweise speziell auf den Adapter abgestimmte Antreiber (wie vorstehend beschrieben) gegenüber herkömmlichen Antreiber bevorzugt zum Einsatz kommen.

Auch die Drehmomentübertragung von der Ritzelbaugruppe auf den Antreiber kann wesentlich einfacher gestaltet werden, als dies bei einer vielteiligen Lösung mit zum Teil einzelnen Ritzeln der Fall ist. Der Adapter kann also funktional genau auf die singuläre Funktion der Positionierung und Fixierung der Ritzelbaugruppe in axialer Richtung und in radialer Richtung relativ zum Antreiber ausgelegt werden, was eine Gewichtsoptimierung zulässt. So kann der Adapter oder diesem zugeordnete Komponenten beispielsweise mit Passungsflächen versehen sein, die die Ritzelbaugruppe relativ zum Antreiber in axialer und/oder radialer Richtung in definierter Stellung positionieren. Auch können Konizitäten am Adapter ausgebildet sein, die eine Zentrierung und Verspannung beim Festschrauben des Adapters gewährleisten. Die Drehmomentübertragung zwischen Ritzelbaugruppe und Antreiber kann unabhängig vom Adapter an einer anderen Stelle der Ritzelbaugruppe erfolgen.

Insbesondere kann vorgesehen sein, dass der Adapter im Bereich seines ersten Kopplungsabschnitts oder/und im Bereich seines zweiten Kopplungsabschnitts mit einer Passfläche zur radialen oder/und axialen Positionierung relativ zur Ritzelbaugruppe und zum Antreiber ausgebildet ist. Dabei ist es möglich, dass die Passfläche von einem an dem Adapter angebrachten Kunststoffkörper gebildet ist, beispielsweise an dem Kunststoffring. Der Kunststoffring kann an den Adapter angespritzt sein. In diesem Zusammenhang kann ferner vorgesehen sein, dass der Adapter mit lokalen Durchbrüchen versehen ist, wobei sich die Kunststoffmasse durch diese lokalen Durchbrüche hindurch erstreckt. Diese Variante sichert eine zuverlässige Fixierung des Kunststoffkörpers an dem Adapter und sorgt dafür, dass auf beiden Seiten des Adapters, d.h. an der Innenumfangsfläche und an der Außenumfangsfläche, ein entsprechender Kunststoffring mit geeigneten Passflächen ausgebildet werden kann.

Unterschiedliche Funktionen, wie sie beim Stand der Technik gemäß EP 1 342 657 B1 vom Adapter oder von auf diesem angebrachten komplexen Zwischenritzeln übernommen werden, nämlich die Positionierung und drehmomentübertragende Aufnahme von Einzelritzeln kleineren Durchmessers, fallen bei der vorliegenden Erfindung weg. Insgesamt ergibt sich ein erheblich vereinfachtes und hinsichtlich der Gewichtseinsparung deutlich optimiertes System.

Eine Ausführungsvariante der Erfindung sieht vor, dass der Adapter in Form einer gestuften Rohrhülse mit einem ersten Durchmesserabschnitt mit einem ersten Außendurchmesser und einem zweiten Durchmesserabschnitt mit einem gegenüber dem ersten Außendurchmesser reduzierten zweiten Außendurchmesser ausgebildet ist. Dabei sind der erste Durchmesserabschnitt auf den Durchmesser des Antreibers und der zweite Durchmesserabschnitt auf die durchmesserkleineren Bereiche der Ritzelbaugruppe abgestimmt. Eine massive, schwere Ausgestaltung des Adapters kann dadurch vermieden werden.

Vorzugsweise kann bei dieser Ausführungsvariante der Erfindung vorgesehen sein, dass der erste Kopplungsabschnitt des Adapters an dessen erstem Durchmesserabschnitt ausgebildet ist. Dabei ist es erfindungsgemäß möglich, dass der erste Kopplungsabschnitt in Form einer Gewindeformation, vorzugsweise einer Innengewindeformation, ausgebildet ist, die mit einer korrespondierenden Gegengewindeformation am Antreiber in Eingriff bringbar ist. Der Adapter ist also auf den Antreiber über entsprechende Gewindeformationen aufschraubbar. Dies erlaubt eine einfache Montage bei zuverlässigem dauerhaftem Halt.

In diesem Zusammenhang kann erfindungsgemäß ferner vorgesehen sein, dass der Antreiber und der Adapter jeweils eine Anlagefläche aufweisen, die bei gegenseitiger Anlage im montierten Zustand eine vorgegebene Relativposition in axialer Richtung oder/und in radialer Richtung (Zentrierung) zwischen Antreiber und Adapter definieren.

Ferner kann bei dieser Ausführungsvariante der Erfindung vorgesehen sein, dass der zweite Kopplungsabschnitt in Form einer Gewindeformation, vorzugsweise einer Außengewindeformation, ausgebildet Ist, über die die Mehrfach-Ritzelanordnung mit dem Adapter verspannbar ist. Die Verspannung kann beispielsweise über eine zusätzliche Mutter erfolgen, die auf die Außengewindeformation am zweiten Kopplungsabschnitt des Adapters aufschraubbar ist und zur axialen Positionierung und Verspannung an der Ritzelbaugruppe angreift. Dabei kann vorgesehen sein, dass der zweite Kopplungsabschnitt am zweiten Durchmesserabschnitt des Adapters angeordnet ist.

Alternativ zu einer Verschraubung zwischen dem Adapter und der Ritzelbaugruppe ist es auch möglich, den Adapter unmittelbar der Ritzelbaugruppe zuzuordnen, beispielsweise an dieser durch Reibschluss oder Formschluss anzubringen. In diesem Zusammenhang sieht eine bevorzugte Ausführungsvariante der Erfindung vor, dass der zweite Kopplungsabschnitt in Form wenigstens eines Haltevorsprungs ausgebildet ist, der in Eingriff mit einer korrespondierenden Halteformation an der Ritzelbaugruppe bringbar ist. Der Adapter wird also durch eine Art Verrastung an der Ritzelbaugruppe angebracht. Das Zusammenwirken zwischen Haltevorsprung und Halteformation lässt sich über eine Hinterschneidung realisieren. Diese Ausführungsvariante hat mehrere Vorteile. Zum einen muss die Ritzelbaugruppe nicht mehr mit einer zusätzlichen Mutter am kleinsten Ritzel axial verspannt werden. Es ist darauf hinzuweisen, dass beim Stand der Technik bei einer axialen Verspannung am kleinsten Ritzel relativ hohe Anpresskräfte wirken können, weshalb die gesamte Ritzelbaugruppe oder Teile davon relativ massiv und damit schwer ausgebildet werden müssen. Durch das Zusammenwirken zwischen Haltevorsprung und Halteformation über eine Hinterschneidung lässt sich die Ritzelbaugruppe besser dimensionieren und muss insbesondere nur dort entsprechend stabil ausgelegt werden, wo tatsächlich die Spannkräfte einwirken, d.h. im Bereich der Halteformation.

In diesem Zusammenhang kann vorgesehen sein, dass der Haltevorsprung an einem axialen Ende des Adapters angeordnet ist, wobei der Adapter an diesem axialen Ende zur Ausbildung von Rastlaschen mehrfach axial geschlitzt ist. Dadurch ist es möglich, den Adapter sozusagen in die Ritzelbaugruppe hinein zu stecken und dort zu verrasten, wobei während der Verrastung die Rastlaschen wegen der axialen Schlitzung elastisch radial einwärts federn können und dann die Halteformation verrastend hintergreifen. Mit anderen Worten kann vorgesehen sein, dass die Rastlaschen zum Einrasten in die Halteformation ausgebildet sind. Das Einrasten kann dadurch unterstützt werden, dass die Haltelaschen mit Fasen zur Schaffung entsprechender Einlaufschrägen versehen sind.

Um den Adapter einfacher montieren zu können, sieht eine Weiterbildung der Erfindung vor, dass dieser eine Angriffsformation aufweist, die zum Übertragen eines Drehmoments zu Montagezwecken ausgebildet ist. In diesem Zusammenhang ist es möglich, dass die Angriffsformation unmittelbar am Adapter oder an einem mit dem Adapter drehmomentübertragend koppelbaren Montagering vorgesehen ist. Gemäß der ersten Alternative können also eine radiale Verzahnung oder eine Stirnverzahnung oder ein anderweitiges mechanisches Angriffsprofil direkt am Adapter ausgebildet sein. In beiden Fällen kann ein Montagewerkzeug mit der jeweiligen Angriffsformation in Eingriff gebracht werden.

Im Falle eines separaten Montagerings kann dieser mit radialen Vorsprüngen versehen sein, die drehmomentübertragend in die Axialschlitze zwischen die Rastlaschen eingreifen. Der Montagering wird somit drehmomentübertragend mit dem Adapter gekoppelt.

Hinsichtlich des Montagerings ist es erfindungsgemäß ferner möglich, dass dieser mit Anlageflächen zum radialen und/oder axialen Positionieren der Ritzelbaugruppe relativ zum Antreiber versehen ist. In Abweichung von den vorangehend beschriebenen Ausführungsformen kann also die radiale und/oder axiale Positionierung der Ritzelbaugruppe vollständig oder teilweise auch vom Montagering übernommen werden.

Eine Weiterbildung der Erfindung sieht vor, dass die Ritzelbaugruppe mit einem Stützring versehen ist, der zur Drehmomentübertragung zwischen der Ritzelbaugruppe und dem Antreiber drehmomentübertragend mit dem Antreiber gekoppelt ist. So kann speziell dieser Stützring entsprechend massiv ausgebildet werden, um den Anforderungen der Drehmomentübertragung auf den Antreiber gerecht zu werden. Der Rest der Ritzelbaugruppe kann dann entsprechend leichter ausgebildet werden. An dem Stützring können dann ein oder mehrere Abschlussritzel ausgebildet oder angebracht sein.

Erfindungsgemäß kann ferner ein rohrförmiges Spannelement vorgesehen sein, das als axialer Anschlag zwischen dem Stützring der Ritzelbaugruppe und dem Adapter oder/und der Ritzelbaugruppe ausgebildet ist. Dieses rohrförmige Spannelement dient in bestimmten Ausführungsformen sozusagen als axialer Anschlag für den Adapter oder für die Ritzelbaugruppe während der Verspannung mit dem Antreiber. Dadurch kann vermieden werden, dass die Ritzelbaugruppe selbst zu stark verspannt und dabei unerwünscht deformiert wird.

Gemäß einer alternativen Ausführungsform der Erfindung, die mit den vorstehend beschriebenen Möglichkeiten zur Weiterbildung kombinierbar ist, kann ferner vorgesehen sein, dass der Adapter wenigstens ein in dem Antreiber aufgenommenes Lager umgreift. Dabei kann das Lager auch in den Adapter eingesetzt sein, wobei der Adapter mit einem Außengewinde dann in den Antreiber hinein oder mit einem Innengewinde auf diesen aufgeschraubt wird.

Die Erfindung betrifft ferner den Adapter als solchen, zum Anbringen einer Ritzelbaugruppe an dem Antreiber einer Mehrfach-Ritzelanordnung gemäß der vorstehenden Beschreibung, wobei der Adapter mit einem ersten Kopplungsabschnitt ausgebildet ist, über den er an dem Antreiber anbringbar ist, und mit einem zweiten Kopplungsabschnitt ausgebildet ist, mit dem er mit der Ritzelbaugruppe gekoppelt oder koppelbar ist. Der Adapter kann einzelne, Kombinationen oder sämtliche adapterspezifischen Merkmale aufweisen, die vorstehend erläutert wurden. Insbesondere ist es möglich, dass der zweite Kopplungsabschnitt an einem mehrfach axial geschlitzten Ende des Adapters ausgebildet ist. Ferner ist es, wie vorstehend bereits ausgeführt, möglich, dass der Adapter eine Angriffsformation aufweist oder mit einer Eingriffsformation drehmomentübertragend gekoppelt ist, die zum drehmomentübertragenden Anbringen eines Montagewerkzeugs ausgebildet ist.

Schließlich betrifft die Erfindung eine Hinterrad-Achsanordnung für ein Fahrrad mit einer Hinterradachse, die zur Befestigung an einem Fahrradrahmen ausgebildet ist, einen auf der Hinterachse drehbar gelagerten Nabenkörper, eine mit einer Antriebskette zusammenwirkenden Mehrfach-Ritzelanordnung der vorstehend beschriebenen Art, und eine Drehmomentübertragungsanordnung, beispielsweise einen Freilauf, zum richtungsselektiven Übertragen eines Drehmoments von der Mehrfach-Ritzelanordnung zu dem Nabenkörper, um den Nabenkörper anzutreiben, wobei die Mehrfach-Ritzelanordnung auf der Hinterradachse drehbar gelagert ist.

Die Erfindung wird im Folgenden beispielhaft anhand der beiliegenden Figuren erläutert. Es stellen dar:
- Fig. 1: eine achsenthaltende Schnittansicht einer ersten Ausführungsvariante einer erfindungsgemäßen Hinterrad-Achsanordnung mit einer erfindungsgemäßen Mehrfach-Ritzelanordnung;
- Fig. 2: eine entsprechende Schnittansicht des Adapters;
- Fig. 3: eine entsprechende achsenthaltende Schnittansicht des Antreibers;
- Fig. 4: eine räumliche Ansicht des Antreibers in Einzelteildarstellung;
- Fig. 5: eine achsenthaltende Schnittansicht einer zweiten Ausführungsvariante der erfindungsgemäßen Hinterrad-Achsanordnung mit einer erfindungsgemäßen Mehrfach-Ritzelanordnung;
- Fig. 6: eine entsprechende achsenthaltende Schnittansicht des Adapters der zweiten Ausführungsvariante;
- Fig. 7: eine räumliche Ansicht des Adapters der zweiten Ausführungsvariante;
- Fig. 8: eine entsprechende achsenthaltende Schnittansicht des Antreibers der zweiten Ausführungsvariante;
- Fig. 9: eine räumliche Ansicht des Antreibers der zweiten Ausführungsvariante in Einzelteildarstellung;
- Fig. 10: eine achsenthaltende Teilschnittansicht einer dritten Ausführungsvariante der erfindungsgemäßen Hinterrad-Achsanordnung mit einer erfindungsgemäßen Mehrfach-Ritzelanordnung;
- Fig. 11: eine entsprechende achsenthaltende Schnittansicht des Adapters der dritten Ausführungsvariante;
- Fig. 12: eine entsprechende achsenthaltende Schnittansicht eines Montagerings der dritten Ausführungsvariante;
- Fig. 13: eine Vorderansicht des Montagerings der dritten Ausführungsvariante;
- Fig. 14: eine achsenthaltende Schnittansicht des Antreibers der dritten Ausführungsvariante; und
- Fig. 15: eine Ausführungsform der Erfindung mit einem vorteilhaft ausgebildeten Antreiber;
- Fig. 16 und 17: verschiedene Darstellungen des Antreibers;
- Fig. 18: eine alternative Gestaltung des Antreibers gemäß Fig. 17 zur Aufnahme eines größeren Lagers;
- Fig. 19: eine Teilschnittansicht einer weiteren Ausführungsform der Erfindung mit einem vorteilhaft ausgebildeten Adapter;
- Fig. 20: eine achsenthaltende Schnittansicht des Adapters als Rohling;
- Fig. 21 und 22: verschiedene Schnittdarstellungen des Adapter in unterschiedlichen Schnittebenen und
- Fig. 23: eine aufgeschnittene perspektivische Ansicht des Adapters.

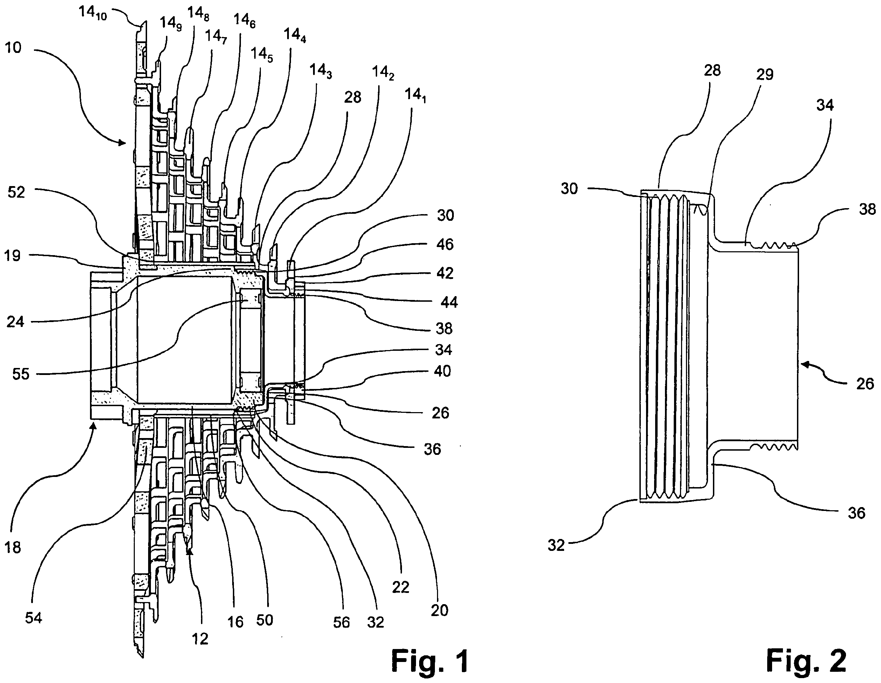

In Fig. 1 ist eine erfindungsgemäße Mehrfach-Ritzelanordnung im achsenthaltenden Schnitt gezeigt und allgemein mit 10 bezeichnet. Diese umfasst eine Ritzelbaugruppe 12, an der mehrere Ritzel 14₁ bis 14₁₀ mit unterschiedlichen Durchmessern und unterschiedlichen Zähnezahlen ausgebildet sind. Die Ritzelbaugruppe 12 ist einstückig ausgebildet bzw. als zusammenhängende Baugruppe, die als eine Komponente während der Montage gehandhabt werden kann. Auch wenn die Ritzelbaugruppe 12 selbst aus mehreren Einzelteilen bestehen kann, so hängen diese nach der Montage fest zusammen und bilden sozusagen eine selbsttragende Einheit.

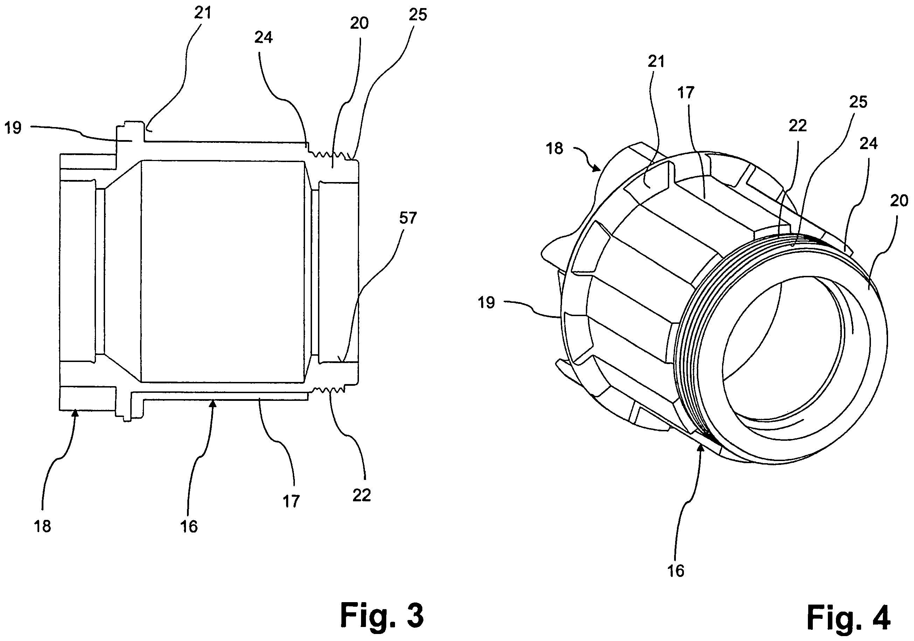

Die Ritzelbaugruppe 12 ist auf einem Antreiber 16 angebracht, der in der Einzelteildarstellung in den Figuren 3 und 4 gezeigt ist. Dieser Antreiber 16 lässt sich in an sich bekannter Weise auf einer nicht gezeigten Hinterradachse eines Fahrrads anbringen. In einem Bereich 18 lässt sich eine Anordnung zur Übertragung des Drehmoments von dem Antreiber 16 bzw. der Ritzelbaugruppe 12 auf eine Freilaufeinrichtung und von dieser auf einen Nabenkörper (beides nicht gezeigt) einer Hinterradachsanordnung anbringen. Der Antreiber 16 kann in herkömmlicher Weise ausgeführt sein und insbesondere Vorkehrungen aufweisen, um zu bereits bekannten, am Markt verbreiteten herkömmlichen Systemen kompatibel zu sein. Insbesondere weist der Antreiber 16 eine Außenverzahnung 17 zur drehmomentübertragenden Aufnahme der Ritzelbaugruppe 12 auf. Ferner weist der Antreiber 16 einen ringförmigen radialen Vorsprung 19 auf, der mit einer axialen Anschlagfläche 21 zur axialen Positionierung der Ritzelbaugruppe 12 dient.

An seinem in Figur 1 rechten Ende ist der Antreiber 16 mit einem in seinem Außendurchmesser reduzierten Abschnitt 20 versehen. An diesem Abschnitt ist eine Außengewindeformation 22 vorgesehen, die in einer Schulter 24 mit einer als Passfläche ausgebildeten Außenumfangsfläche 25 endet. Auf diesen in seinem Außendurchmesser reduzierten Abschnitt 20 ist im montierten Zustand ein hülsenförmiger Adapter 26 aufgeschraubt, der in Einzelteildarstellung im Schnitt in Figur 2 gezeigt ist. Hierzu weist der Adapter 26 einen ersten Abschnitt 28 mit einem großen Durchmesser auf, an dem eine Innengewindeformation 30 ausgebildet ist. An diese Innengewindeformation 30 schließt sich eine Innenumfangsfläche 29 an, die als Passfläche ausgebildet ist und mit der korrespondierenden Passfläche 25 am Antreiber 16 zur radialen Positionierung des Adapters 26 relativ zum Antreiber 16 ausgebildet ist.

Der erste Abschnitt 28 endet in einer Stirnfläche 32, die in dem in Figur 1 gezeigten montierten Zustand in definierter Anlage mit der Schulter 24 steht und so die axiale Position des Adapters 26 relativ zu dem Antreiber 16 bestimmt. Der Adapter 26 weist ferner einen zweiten Abschnitt 34 auf, der einen kleineren Durchmesser besitzt, als der erste Abschnitt 28. Die beiden Abschnitte 28 und 34 sind über einen Übergangsabschnitt 36 miteinander verbunden.

An dem durchmesserkleineren Abschnitt 34 ist eine Außengewindeformation 38 vorgesehen. Auf diese ist im montierten Zustand gemäß Figur 1 eine Spannmutter 40 aufgeschraubt. Die Spannmutter 40 weist an ihrer Außenumfangsfläche mehrere Ausnehmungen 42 auf, an denen ein Werkzeug angreifen kann, um während der Montage auf die Spannmutter 40 zum Verspannen ein Drehmoment auszuüben. Die Spannmutter 40 liegt mit einer seitlichen Anlagefläche 44 an einer ihr zugewandten axialen Endfläche 46 der Ritzelbaugruppe 12 an. Durch Anziehen der Spannmutter 40 kann die Ritzelbaugruppe 12 in axialer Richtung positioniert und verspannt werden.

In Figur 1 erkennt man ferner ein Rohrelement 50, das sich mit einem Ende 52 an einem Stützring 54 der Ritzelbaugruppe 12 axial abstützt und mit einem anderen Ende 56 innerhalb der Ritzelbaugruppe 12 an einem der kleineren Ritzel, nämlich an dem Ritzel 14₂. Der durch das Festziehen der Mutter 40 aufgebrachte Kraftfluss in axialer Richtung erstreckt sich also über die beiden kleinen Ritzel 14₁ und 14₂, das Rohrelement 50 auf den Stützring 54 und von diesem auf den Antreiber 16.

Festzuhalten ist, dass sich die Ritzelbaugruppe 12 aus dem separaten Stützring 54, an dem das größte Ritzel 14₁₀ integral ausgebildet ist, und einer Unterbaugruppe der verbleibenden Ritzel 14₁ bis 14₉, sowie dem Rohrelement 50 zusammensetzt, das vor Anbringung des Stützrings 54 eingesetzt wird. Wie bereits ausgeführt wird der Stützring 54 fest mit der Unterbaugruppe der verbleibenden Ritzel 14₁ bis 14₉ verbunden, beispielsweise durch Verpressen, Vernieten, Verkleben oder dergleichen. Der Stützring 54 weist als Drehmomentübertragungsabschnitt eine Innenverzahnung auf, die zu der Außenverzahnung 17 des Antreibers 16 korrespondiert, und dient zur Drehmomentübertragung zwischen Ritzelbaugruppe 12 und Antreiber 16.

Schließlich zeigt Figur 1 auch noch das Lager 55, das in dem Antreiber 16 in einer hierfür ausgebildeten Lagerausnehmung mit einer Passfläche 57 passgenau angeordnet ist und zur Lagerung des Antreibers 16 auf der nicht gezeigten Hinterradachse vorgesehen ist.

Die Montage des gesamten Systems ist relativ einfach. Auf den Antreiber 16 wird der in Figur 1 gezeigte Adapter 26 aufgeschraubt und fixiert. Sodann wird die Ritzelbaugruppe 12 auf den Antreiber 16 aufgesteckt. Schließlich wird die Spannmutter 40 aufgeschraubt und so weit fest gezogen, bis das Rohrelement 50 sozusagen als definierter Anschlag dient.

Insgesamt ergibt sich also ein gegenüber dem Stand der Technik erheblich vereinfachtes System, das wesentlich leichter ausgebildet werden kann, als beispielsweise das komplexe mehrteilige System gemäß dem nächstkommenden Stand der Technik. Dieses System lässt sich aber mit bestehenden, seit langem Einsatz befindenden Antreiberlösungen kombinieren, so dass auf derartige Antreiber gemäß dem Stand der Technik auch Ritzelbaugruppen mit Ritzeln mit sehr geringen Zähnezahlen aufgesetzt werden können.

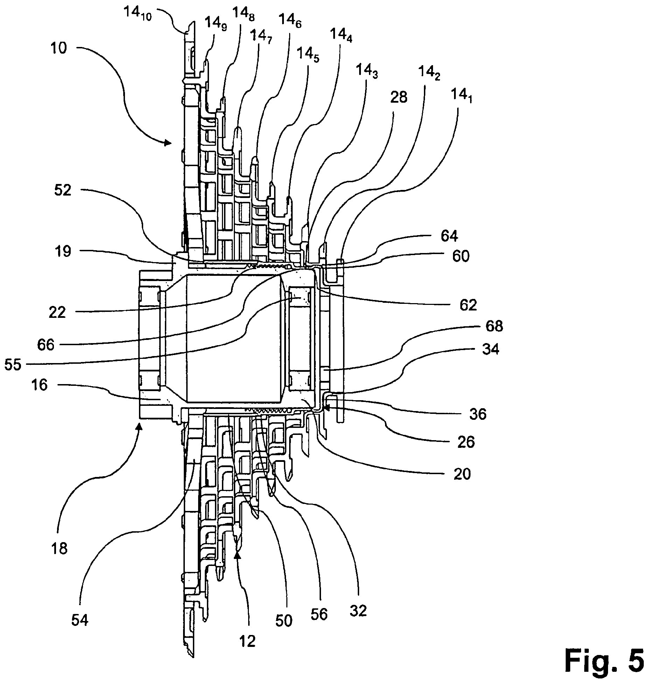

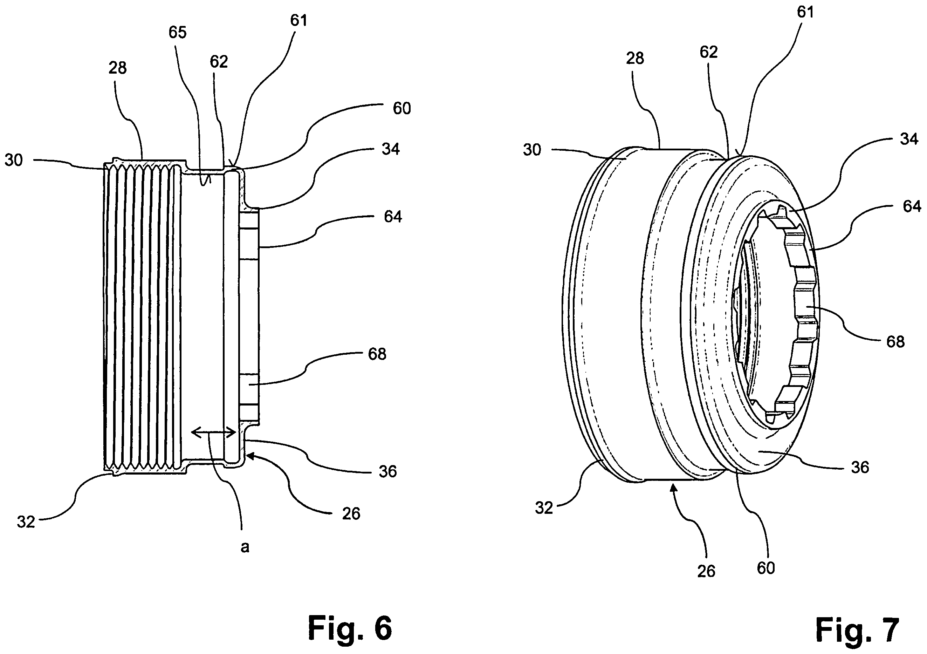

Figuren 5 bis 9 zeigen eine zweite Ausführungsform der Erfindung. Zur Vermeidung von Wiederholungen werden für gleichartige oder gleichwirkende Komponenten dieselben Bezugszeichen verwendet, wie bei der ersten Ausführungsform. Im Folgenden soll lediglich auf die Unterschiede zur ersten Ausführungsform eingegangen werden.

Wiederum erkennt man, dass an dem Antreiber 16 eine Außengewindeformation 22 angebracht ist. An diese Außengewindeformation 22 schließt sich noch ein gewindefreier Abschnitt 20 an. Der Adapter 26 ist wiederum mit einem Abschnitt 28 versehen, an dem eine Innengewindeformation 38 vorgesehen ist. Anders als bei der ersten Ausführungsvariante gemäß Figur 1 stützt sich der Adapter 26 mit seiner Stirnfläche 32 in axialer Richtung nicht am Antreiber 16 ab, sondern am Rohrelement 50 (siehe Figur 5).

Ein weiterer Unterschied zwischen der ersten Ausführungsform gemäß Figur 1 und der zweiten Ausführungsform gemäß Figur 2 liegt darin, wie der Adapter 26 mit der Ritzelbaugruppe 12 gekoppelt ist. Der Adapter 26 weist einen im Durchmesser erweiterten Abschnitt 60 mit einer Außenumfangsfläche 61 zur radialen Positionierung und einer schulterartigen Anlagefläche 62 auf. Dieser Abschnitt 60 greift in eine radiale Ausnehmung 64 in der Ritzelbaugruppe 12 ein, die sozusagen einen Hinterschnitt bildet. Die Anlagefläche 62 liegt an einer korrespondierenden Gegenanlagefläche 66 an und sorgt dafür, dass die Ritzelbaugruppe 12 im montierten Zustand in axialer Richtung nicht über die Anlagefläche 62 abrutschen kann. An dieser Stelle wirken bei der Verspannung der Ritzelbaugruppe 12 mit dem Antreiber die Spannkräfte. Dies ist für den Kraftfluss besser, als beim Stand der Technik, bei dem die Ritzelbaugruppe am kleinsten Ritzel mit einem Spannelement auf den Antreiber aufgespannt wird, was zu einer ungünstigen Einwirkung von zum Teil hohen Spannkräften gerade am kleinsten Ritzel führt. Es ist anzumerken, dass der Adapter 26 in dieser radialen Ausnehmung 64 nicht eingepresst ist, sondern mit geringem Spiel darin aufgenommen, so dass sich der Adapter 26 relativ zu der Ritzelbaugruppe 12 verdrehen lässt.

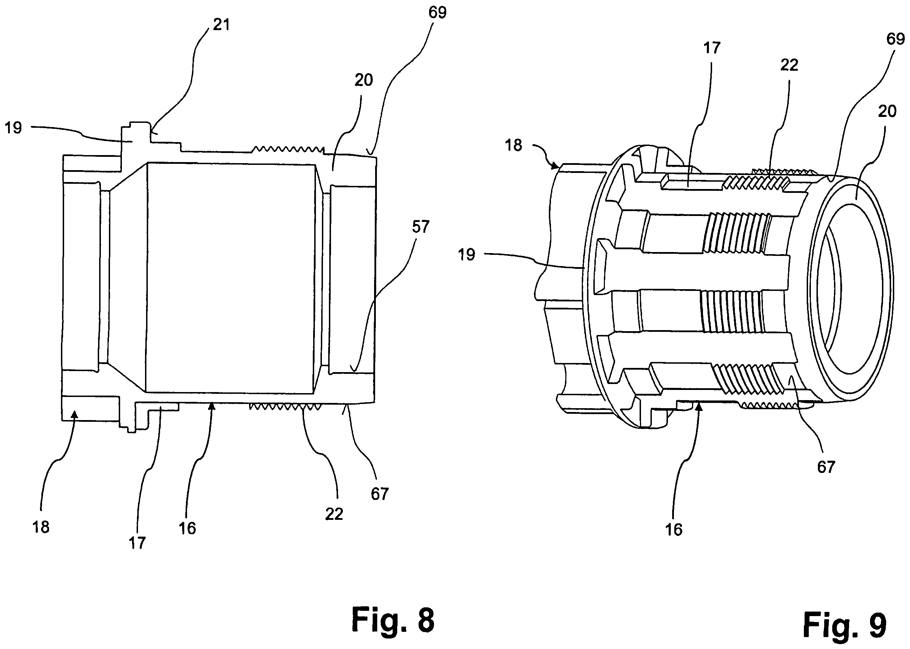

Die zur Erhöhung der Elastizität des Adapters im Abstand a zu der Passfläche 61 angeordnete Innenumfangsfläche 65 wirkt mit einer korrespondierenden Außenumfangsfläche 67 (siehe Figur 8) zur radialen Positionierung zusammen. Der Außenumfangsfläche 67 ist eine leichte Konizität 69 vorgeordnet.

Ein zusätzlicher Unterschied zu der ersten Ausführungsform besteht bei der zweiten Ausführungsform gemäß Figuren 5 bis 9 darin, dass der Adapter 26 an seinem (durchmesserkleineren) Abschnitt 34 keine Außengewindeformation mehr besitzt, weil eine zusätzliche Spannmutter nicht mehr erforderlich ist. Allerdings weist der Adapter 26 an seinem durchmesserkleineren Abschnitt 34 radial einwärts stehende Vorsprünge 68 auf, an denen ein Werkzeug zu Montagezwecken drehmomentübertragend angreifen kann.

Bei dieser Ausführungsvariante umfasst die Ritzelbaugruppe den zur Drehmomentübertragung zu dem Antreiber ausgebildeten Stützring 54 mit seinem integral ausgebildeten größten Ritzel 14₁₀ (Abschlußritzel), die Unterbaugruppe aus den Ritzeln 14₁ bis 14₉, das vorab eingebrachte Rohrelement 50 und den vorab eingebrachten Adapter 26. Diese Anordnung wird auf den Antreiber 16 aufgesteckt und durch Aufschrauben des Adapters 26 mit seiner Innengewindeformation 38 auf die Außengewindeformation 30 des Antreibers 16 fixiert. Bei diesem Aufschrauben dreht sich der Adapter 26 relativ zur Unterbaugruppe aus den Ritzeln 14₁ bis 14₉.

Es ergibt sich also ein verhältnismäßig einfacher, leichter und insbesondere denkbar einfach zu montierender Aufbau. Beide Ausführungsvarianten haben den Vorteil, dass sich eine Ritzelbaugruppe mit sehr kleinen Ritzeln und damit geringen Zähnezahlen verwenden lässt. Die zweite Ausführungsvariante gemäß den Figuren 5 bis 9 hat die weiteren Vorteile, dass die Verwendung einer zusätzlichen Spannmutter nicht mehr erforderlich ist. Dies macht es möglich, dass am kleinsten Ritzel keine Anpresskräfte mehr einwirken, die dessen Elastizität bei der Kraftübertragung von der Kette beeinträchtigen könnten. Außerdem können durch Weglassung der Spannmutter damit verbundene praktische Nachteile vermieden werden, wie etwa das Erfordernis von zusätzlichem Bauraum für die Spannmutter. Darüber hinaus können eine unerwünschte Wechselwirkung eines in das Außenprofil der Spannmutter eingesteckten Montagewerkzeugs mit den Zähnen des Ritzels während der Montage oder im Betrieb eine unerwünschte Wechselwirkung des Außenprofils der Spannmutter mit der auf dem kleinsten Ritzel aufliegenden Kette vermieden werden.

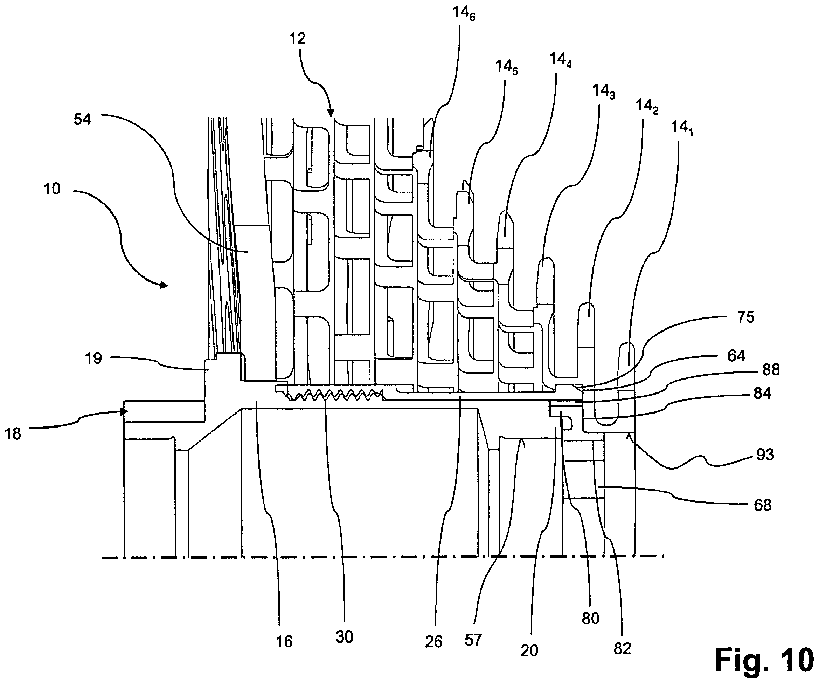

In den Figuren 10 bis 13 ist eine weitere Ausführungsvariante dargestellt, die sich an die zweite Ausführungsvariante gemäß den Figuren 5 bis 9 anlehnt. Im Folgenden soll auf die Unterschiede zu dieser zweiten Ausführungsvariante eingegangen werden.

Der Antreiber 16 gemäß der dritten Ausführungsvariante ist ähnlich dem Antreiber der zweiten Ausführungsvariante ausgeführt, wobei jedoch das Außengewinde 22 in axialer Richtung weiter nach links verlagert ist. Die wesentlichen Unterschiede liegen in der Ausbildung des Adapters 26 sowie in der Anbringung eines zusätzlichen Montagerings 70.

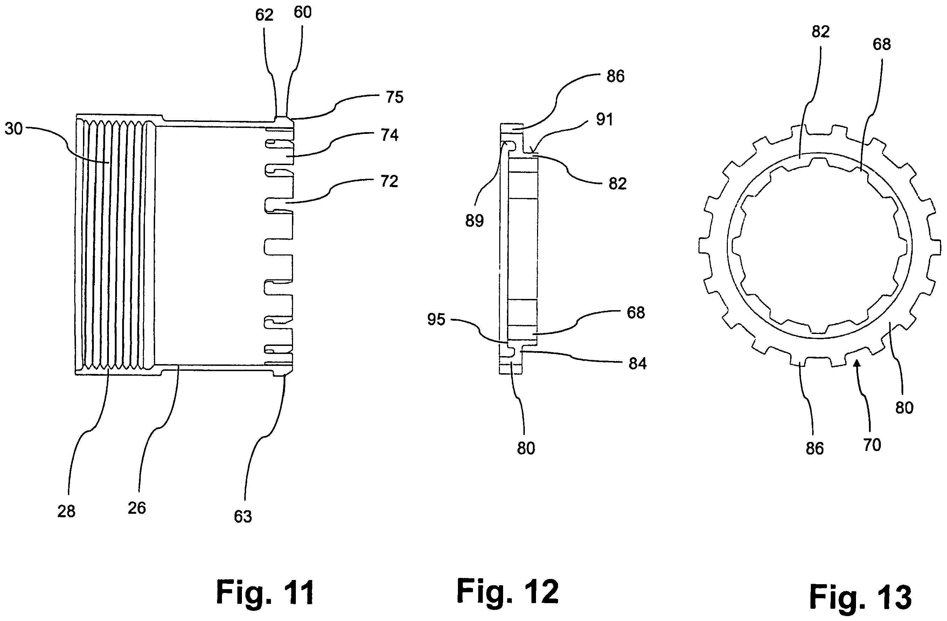

Der Adapter 26 besitzt wiederum ein Innengewinde 30 in seinem Bereich 28. Er ist rohrförmig und nur mit geringen Durchmesserunterschieden ausgebildet. An seinem in Figur 11 rechten Ende besitzt er einen umlaufenden Vorsprung 60 mit einer Anlagefläche 62 und einer umlaufenden Fase 63. Man erkennt in Figur 11, dass der Adapter 26 an seinem axialen Ende mit einer Vielzahl von axialen Schlitzen 72 versehen ist, die den Adapter 26 über den umlaufenden Vorsprung 60 hinaus radial durchbrechen, und so einzelne Rastlaschen 74 schaffen. Durch die axialen Schlitze 72 können die Rastlaschen 74 elastisch radial einwärts federn. Die Rastlaschen 74 sind mit einer umlaufenden Fase 75 versehen, um den Rastvorgang zu erleichtern.

Figuren 12 und 13 zeigen den Montagering 70. Dieser weist zwei ringartige Abschnitte 80 und 82 auf, die über einen Verbindungsabschnitt 84 miteinander verbunden sind. Der äußere Ringabschnitt 80 besitzt eine Außenverzahnung 86 mit radial vorstehenden Vorsprüngen 86 an seinem Außenumfang. Die Anzahl und die Dimensionierung der Vorsprünge 86 sowie deren Anordnung ist genau auf die der Schlitze 72 im Adapter 26 abgestimmt, so dass sich der Montagering 70 derart In den Adapter 26 einstecken lässt, dass die Vorsprünge 86 mehr oder weniger passgenau in die Schlitze 72 eingreifen. Allerdings ergibt sich zwischen dem Montagering 70 und der Innenumfangsfläche der Laschen 74 ein Radialspiel 88 (siehe Figur 10), um zu gewährleisten, dass die Laschen 74 radial einwärts federn können. An der Innenumfangsfläche besitzt der Montagering 70 eine Verzahnung 68, wie sie bereits mit Bezug auf Figur 5 erläutert wurde.

Die Innenumfangsfläche 89 des äußeren Ringabschnitts 80 ist als Passfläche ausgebildet, die zur radialen Positionierung des Montagerings 70 relativ zum Antreiber vorgesehen ist. Sie sitzt passgenau auf der Außenumfangsfläche 25 am Abschnitt 20 des Antreibers 16 auf.

Der innere Ringabschnitt 82 des Montagerings 70 ist mit einer Passfläche 91 versehen, die positionierend mit einer Innenumfangsfläche 93 an der Ritzelbaugruppe 12 zur radialen Positionierung zusammenwirkt. Außerdem ist am inneren Ringabschnitt 82 noch eine Anschlagfläche 95 vorgesehen, die zur axialen Positionierung der Ritzelbaugruppe relativ zum Antreiber dient. Diese wirkt mit einer korrespondierenden Stirnfläche 97 des Antreibers 16 zusammen.

Die Montage dieser dritten Ausführungsform erfolgt ähnlich zu der gemäß der zweiten Ausführungsform. Zunächst wird der Adapter 26 auf den Antreiber 16 aufgeschraubt. Anschließend wird der Montagering 70 in den Adapter 26 eingesteckt, so dass die Vorsprünge 86 in die Schlitze 72 eingreifen. Sodann wird die Ritzelbaugruppe 12 aufgesteckt und schließlich mit den Rastlaschen 74 verrastet. Die Fase 63 erleichtert die Positionierung und das Aufstecken. Das Radialspiel zwischen Montagering 70 Rastlaschen 74 lässt eine entsprechende elastische Deformation der Laschen 74 während der Verrastung zu.

Schließlich kann mit einem Montagewerkzeug drehmomentübertragend in die Verzahnung 68 an der Innenumfangsfläche des Montagerings 70 eingegriffen werden, so dass der Montagering 70 und mit diesem der Adapter 26 zum Aufschrauben desselben auf das Außengewinde 30 verdreht werden kann. Dadurch kann die Ritzelbaugruppe 12 in axialer Richtung auf den Antreiber 16 aufgespannt werden, wobei die entsprechenden Axialkräfte über die Wechselwirkung der beiden Flächen 62 und 66 zwischen Adapter 26 und Ritzelbaugruppe 12 erfolgt.

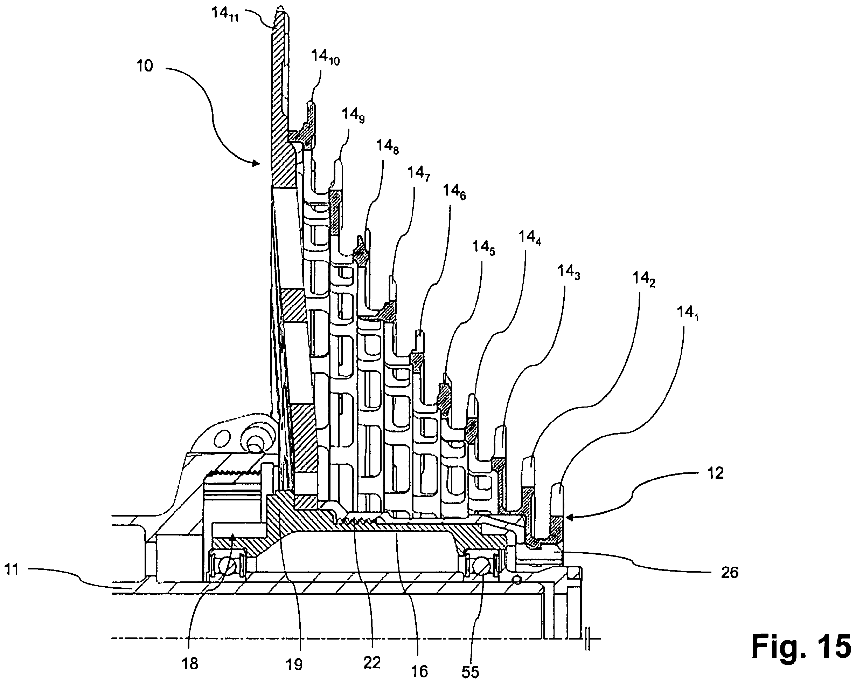

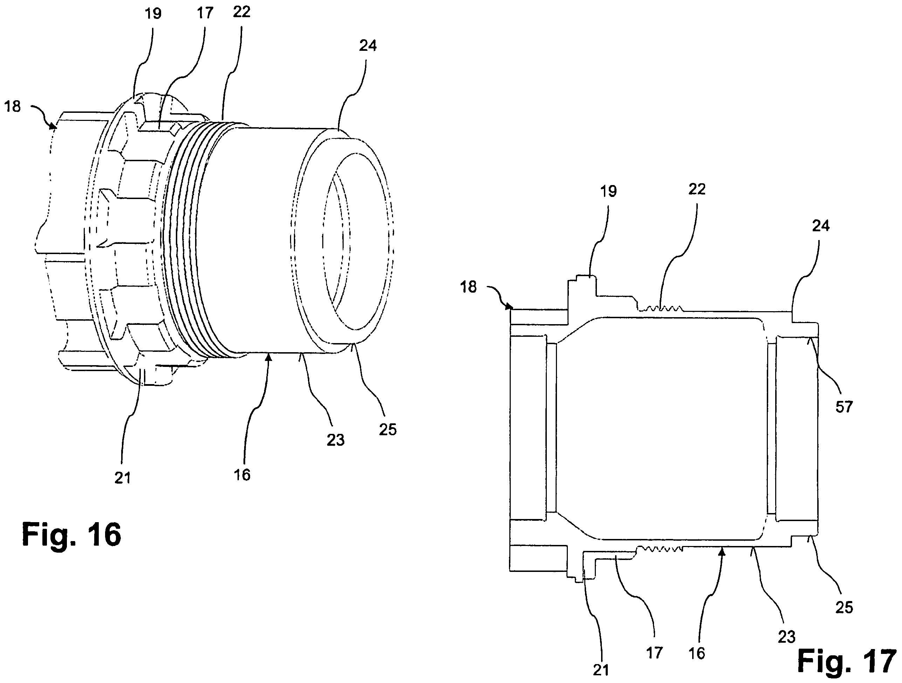

Figuren 15 bis 17 zeigen eine weitere Ausführungsform der Erfindung, wobei wiederum für gleichartige oder gleichwirkende Komponenten dieselben Bezugszeichen verwendet wurden, wie bei der vorangehenden Beschreibung der Ausführungsbeispiele gemäß Fig. 1 bis 14.

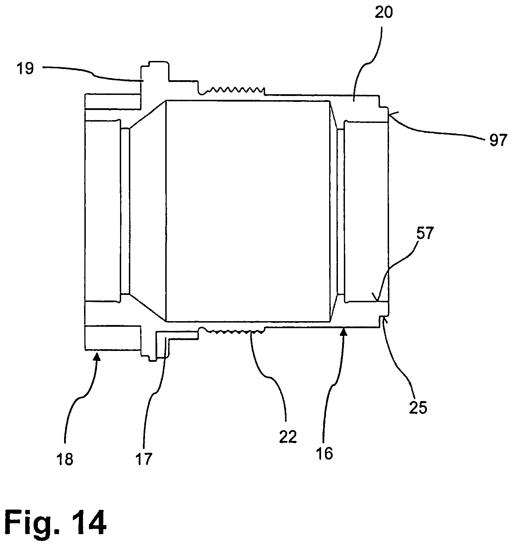

Die Ausführungsform gemäß Fig. 15 bis 17 zeichnet sich durch einen besonders vorteilhaft gestalteten Antreiber 16 aus, der auf einer Achse 11 gelagert ist. Dieser Antreiber 16 weist wiederum den ringförmigen radialen Vorsprung 19 mit seiner axialen Anschlagfläche zur axialen Positionierung der Ritzelbaugruppe 12 auf. Direkt anschließend an den radialen Vorsprung 19 erstreckt sich über einen relativ kleinen Längenabschnitt die Außenverzahnung 17 zur Drehmomentübertragung zwischen der Ritzelbaugruppe 12 und dem Antreiber. Benachbart zur Außenverzahnung 17 erstreckt sich die Außengewindeformation 22. Hinsichtlich der Anordnung ähnelt der Antreiber 16 gemäß dem Ausführungsbeispiel nach Fig. 15 bis 17 dem Antreiber gemäß dem Ausführungsbeispiel nach Fig. 14. Wird, wie in Fig. 15 gezeigt, der Adapter 26 mit der Ritzelbaugruppe 12 aufgeschraubt und durch Anziehen der Verschraubung fixiert, so treten lediglich in dem Bereich zwischen dem ringförmigen Abschnitt 19 aufgrund seiner Anschlagfunktion und dem Gewindeabschnitt 22 Zugkräfte im Antreiber 16 auf. Der Bereich, in dem diese Zugkräfte auftreten, ist in axialer Richtung relativ klein bemessen und aufgrund der Verzahnung 17 stabil ausgebildet.

In axialer Richtung an die Außengewindeformation 22 anschließend erstreckt sich ein relativ großflächiger zylindrischer Abschnitt 23, der zur Führung des Adapters 26 mit einer entsprechenden zylindrischen Innenumfangsfläche zusammenwirkt. Dieser Flächenabschnitt 23 dient auch als Führungsfläche für den Adapter 26 und die darauf angebracht Ritzelbaugruppe 12 bei der Montage. Über diese Führungsfläche 23 kann der Adapter 26 mit einem gewissen Radialspiel sicher auf den Antreiber 16 aufgesteckt und aufgeschraubt werden, ohne dass es zu einem Verkanten des Adapters 26 relativ zu dem Antreiber 16 oder gar zu einem die Gewindeformationen 22 und 30 beschädigenden schrägen Aufschrauben kommt. Es ist zu berücksichtigen, dass sowohl der Antreiber als auch der Adapter aus leichtgewichtigem Aluminium hergestellt werden können, wobei dieses Material relativ leicht deformierbar ist. Gerade aus diesem Grund ist die Führungsfläche 23 vorteilhaft. Am axialen Ende des Flächenabschnitts 23 ist der Antreiber 16 mit der Schulter 24 ausgebildet und endet in dem durchmesserreduzierten Vorsprung mit der Außenumfangsfläche 25, die wiederum für den Adapter 26 als Passfläche zur radialen Positionierung dient. Radial innerhalb dieses Bereichs ist die Passfläche 57 zur Aufnahme des Radiallagers 55 vorgesehen.

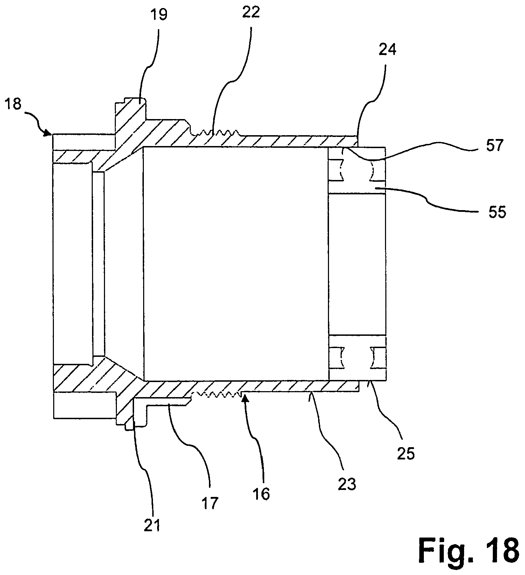

Fig. 18 zeigt eine hierzu alternative Ausführungsform, bei der statt einer Schulter 24 eine Stirnfläche 24 vorgesehen ist und der in seiner Außenumfangsfläche reduzierte, zur Positionierung des Adapters 26 dienende Axialabschnitt des Antreibers 16 an dessen Axialende weggelassen wurde. Stattdessen wurde die radial innenliegende Passfläche 57 radial vergrößert, um ein durchmessergrößeres Lager 55 unterzubringen, das um einen Axialabschnitt aus dem Antreiber 16 vorsteht. Dieser vorspringende Axialabschnitt bildet mit seiner präzise ausgebildeten Außenumfangfläche die für die Positionierung des Adapters nutzbare Passfläche 25.

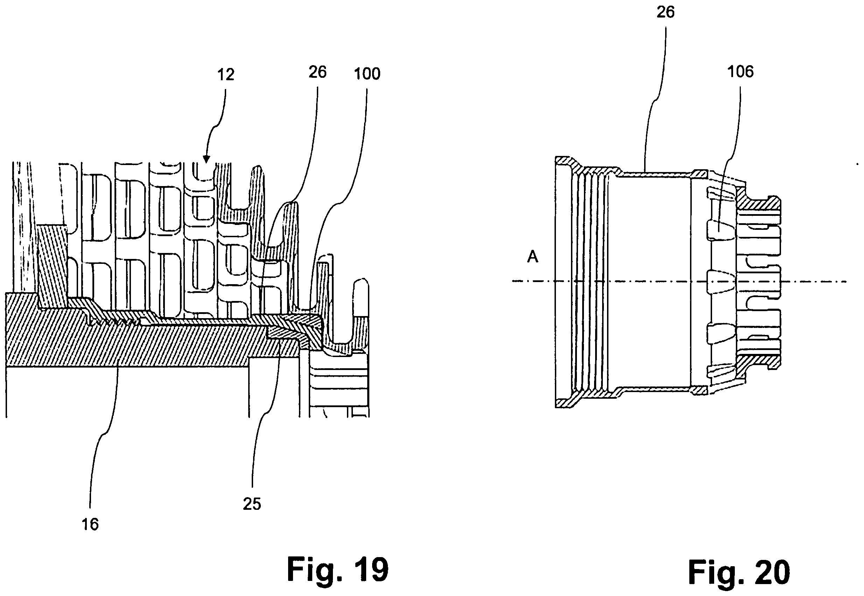

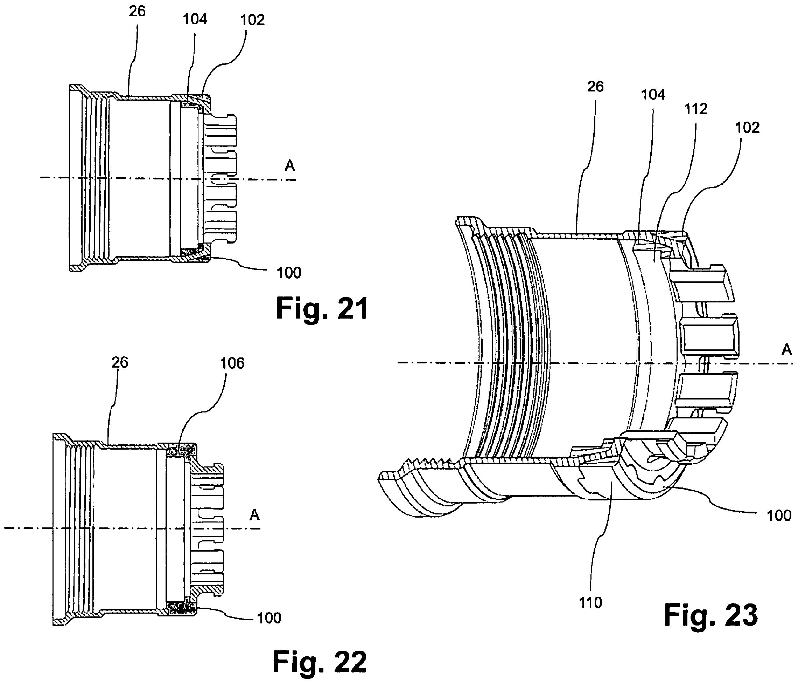

Figuren 19 bis 23 zeigen eine weitere Ausführungsform der Erfindung, wobei wiederum für gleichartige oder gleichwirkende Komponenten dieselben Bezugszeichen verwendet wurden, wie bei der vorangehenden Beschreibung der Ausführungsbeispiele gemäß Fig. 1 bis 18.

Die Ausführungsform gemäß Fig. 19 bis 23 entspricht im Wesentlichen der Ausführungsform gemäß den Figuren 15 bis 18 und zeichnet sich durch einen vorteilhaft gestalteten Adapter 26 aus. Dieser Adapter 26 weist in seinem rechten Endbereich, der im montierten Zustand nahe der Passfläche 25 angeordnet ist, einen Kunststoffkörper 100 auf. Dieser Kunststoffkörper 100 sieht sowohl an der Außenumfangsfläche als auch an der Innenumfangsfläche des Adapters 26 eine ringförmige Kunststoffummantelung 102, 104 vor.

Wie man in Figur 20 erkennen kann, ist der Adapterkörper 26 als Rohling in diesem Bereich leicht konisch ausgebildet und weist in regelmäßigen Winkelabständen angeordnete radiale Durchbrüche 106 auf. Im Bereich dieser radialen Durchbrüche 106 liegen die beiden Kunststoffringe 102, 104. Sie sind durch Stege 108 integral miteinander verbunden, die sich durch die Durchbrüche 106 hindurch erstrecken. So lassen sich die beiden Kunststoffringe 102, 104 an den Adapterrohling gemäß Figur 20 anspritzen und integral an dem Adapter 26 anformen.

Die beiden Kunststoffringe 102, 104 sind mit Passflächen 110, 112 ausgebildet, die sich jeweils parallel zur Längsachse A und mit einem Flächenabschnitt orthogonal zur Längsachse A erstrecken. Die Passfläche 112 am inneren Kunststoffring 104 dient zur radialen und axialen Positionierung des Adapters 26 relativ zum Antreiber 16. Die Passfläche 110 am äußeren Kunststoffring 102 dient zur Positionierung der Ritzelbaugruppe relativ zum Adapter 26.

Die beiden Kunststoffringe 102, 104 ermöglichen mit relativ geringem Aufwand einen Toleranzausgleichs in der Schnittstelle zum benachbarten Bauteil und die Bereitstellung von geeigneten Positionierungs- bzw. Passflächen zu denjenigen Komponenten, die mit dem Adapter Kontakt treten.

Bei den Ausführungsformen gemäß den Figuren 5 bis 23 ergeben sich gegenüber dem Stand der Technik weitere Vorteile:
- Die Anpresskräfte am kleinen Ritzel über eine zusätzliche Spannmutter können durch die Verrastung vermieden werden.
- Auch die mit der Spannmutter verbundenen weiteren Nachteile, wie zusätzlicher Bauraum oder eine unerwünschte Wechselwirkung mit der Kette oder dem kleinsten Ritzel im Betrieb oder bei der Montage können vermieden werden.
- Die Ritzelbaugruppe kann insbesondere in dem Bereich der Verrastung entsprechend stabil dimensioniert werden, in anderen Bereichen jedoch schwächer und damit gewichtssparender ausgeführt werden.
- Auch lassen sich spezielle positionierende Passflächen zum Antreiber und zur Ritzelbaugruppe für die Zentrierung und Aufnahme von Radiallasten vorsehen.
- Auch der Antreiber lässt sich hinsichtlich seiner Struktur und seines Gewichts gegenüber dem Stand der Technik deutlich verbessern.
- Er weist zur Verspannung ein Außengewinde auf und besitzt ein entsprechendes Mitnahmeprofil zur Drehmomentübertragung auch im Bereich der kleineren Ritzel, was ungünstige Spannungszustände vermeidet.
- Der Anordnung des Lagers innerhalb der Ritzelbaugruppe unterliegt deutlich weniger Einschränkungen.
- Insbesondere die Ausführungsformen gemäß Fig. 15 bis 23 sind aufgrund der vorteilhaften Konzentration der auftretenden Zugkräfte im Bereich der relativ massiv ausgebildeten Verzahnung 17 vorteilhaft.

Insgesamt schaffen sämtliche Ausführungsbeispiele der Erfindung vielfältige Vorteile gegenüber dem Stand der Technik. Die einzelnen Komponenten sind gegenüber dem Stand der Technik deutlich optimiert worden und wirken mit ihren Einzelmerkmalen derart zusammen, dass sich insgesamt ein leichteres, einfacher montierbares und stabiles System ergibt.

## Patentansprüche

1. Antreiber (16) zur Montage an einer Hinterradachse eines Fahrrads, wobei der Antreiber zur Anbringung einer Ritzelbaugruppe (12) ausgebildet ist, an der eine Mehrzahl von Ritzeln (141-1410) mit unterschiedlichen Zähnezahlen vorgesehen ist, wobei der Antreiber (16) umfasst:
- eine Drehmomentaufnahmeformation (17) zum drehmomentübertragenden Koppeln mit der Ritzelbaugruppe (12)
- einen Positionierungsabschnitt (25) zum Positionieren der Ritzelbaugruppe in radialer Richtung,
- eine Außengewindeformation (22), auf die ein Adapter (26) zum axialen Fixieren der Ritzelbaugruppe (12) aufschraubbar ist, und
- eine Abtriebsformation (18) zum Übertragen eines Drehmoments auf eine Nabenanordnung einer Hinterradachse eines Fahrrads,
**dadurch gekennzeichnet,**
**dass** sich zwischen der Drehmomentaufnahmeformation (17) und dem Positionierungsabschnitt (25) die Außengewindeformation (22) erstreckt.

2. Antreiber (16) nach Anspruch 1,
**gekennzeichnet durch** einen Führungsabschnitt (23), der zwischen der Drehmomentaufnahmeformation (17) und dem Positionierungsabschnitt (25) angeordnet ist.

3. Antreiber (16) nach Anspruch 1 oder 2,
**gekennzeichnet durch** einen axialen Anschlag (19) für die Ritzelbaugruppe (12), der benachbart zu der Drehmomentaufnahmeformation (17) ausgebildet ist.

4. Antreiber (16) nach einem der Ansprüche 1 bis 3,
**dadurch gekennzeichnet,**
**dass** sich die Drehmomentaufnahmeformation (17) lediglich über einen Teilabschnitt der axialen Länge des Antreibers (16) zwischen dem axialen Anschlag (19) und dem freien Ende des Positionierungsabschnitts (25) erstreckt, vorzugsweise über einen Teilabschnitt, der kleiner ist, als ein Viertel, besonders bevorzugt kleiner ist, als ein Fünftel dieser axialen Länge des Antreibers (16).

5. Antreiber (16) nach Anspruch 4,
**dadurch gekennzeichnet,**
**dass** der Teilabschnitt im Wesentlichen der axialen Länge der korrespondierenden Drehmomentübertragungsformation der Ritzelbaugruppe entspricht.

6. Antreiber (16) nach einem der vorangehenden Ansprüche,
**dadurch gekennzeichnet,**
**dass** die Außengewindeformation (22) unmittelbar an die Drehmomentaufnahmeformation (17) angrenzt.

7. Antreiber (16) nach einem der Ansprüche 2 bis 6,
**dadurch gekennzeichnet,**
**dass** der Führungsabschnitt (23) von einer im Wesentlichen zylindrischen oder leicht konischen Außenoberfläche gebildet ist.

8. Antreiber (16) nach einem der Ansprüche 2 bis 7,
**dadurch gekennzeichnet,**
**dass** der Führungsabschnitt (23) einen kleineren maximalen Außendurchmesser aufweist, als die Drehmomentaufnahmeformation (17) und die Außengewindeformation (22).

9. Antreiber (16) nach einem der Ansprüche 2 bis 8,
**dadurch gekennzeichnet,**
**dass** an einem von der Drehmomentaufnahmeformation (17) fernen Ende der Positionierungsabschnitt (25) vorgesehen ist, der mit einem kleineren Außendurchmesser ausgebildet ist, als der Außendurchmesser des Führungsabschnitts (23).

10. Antreiber (16) nach Anspruch 9,
**dadurch gekennzeichnet,**
**dass** das von der Drehmomentaufnahmeformation (17) ferne Ende des Antreibers (16) zum Aufnehmen eines Lagers (55) ausgebildet ist.

11. Antreiber (16) nach einem der vorangehenden Ansprüche,
**dadurch gekennzeichnet,**
**dass** an einem von der Drehmomentaufnahmeformation (17) fernen Ende ein Innendurchmesserabschnitt (57) zum Aufnehmen eines in seinem Durchmesser vergrößerten Lagers (55) ausgebildet ist.

12. Antreiber (16) nach Anspruch 10 oder 11,
**dadurch gekennzeichnet,**
**dass** der Positionierungsabschnitt (25) einen aus dem Antreiber (16) axial vorstehenden Teilabschnitt der Außenumfangsfläche des Lagers (55) umfasst oder von diesem gebildet wird.

13. Antreiber (16) nach einem der vorangehenden Ansprüche,
**dadurch gekennzeichnet,**
**dass** der Antreiber (16) an seinem der Drehmomentaufnahmeformation nahen Ende mit einem Innendurchmesserabschnitt zum Aufnehmen eines Lagers ausgebildet ist.

14. Antreiber (16) nach einem der vorangehenden Ansprüche,
**gekennzeichnet durch** die Abtriebsformation (18), die an dem der Drehmomentaufnahmeformation (17) nahen Ende zum Übertragen eines Drehmoments auf eine Nabenanordnung der Hinterradachse (11) des Fahrrads ausgebildet ist.

15. Mehrfach-Ritzelanordnung (10) mit einer Mehrzahl von Ritzeln (141-1410) mit unterschiedlichen Zähnezahlen zur Montage an einer Hinterradachse eines Fahrrads, umfassend
- eine Ritzelbaugruppe (12), an der zumindest ein Teil der Mehrzahl der Ritzel (141-1410) vorgesehen ist,
und die mit einer Drehmomentaufnahmeformation (17) eines Antreibers (16) nach einem der vorangehenden Ansprüche drehmomentübertragend verbunden oder verbindbar ist, und
- einen Adapter (26), der zum axialen Fixieren der Ritzelbaugruppe (12) an dem Antreiber (16) auf eine Außengewindeformation (22) des Antreibers (16) nach einem der vorangehenden Ansprüche über einen ersten Kopplungsabschnitt (28) derart aufschraubbar oder aufgeschraubt ist, dass der Adapter (26) den Antreiber (16) im axialen Bereich wenigstens eines Ritzels der Ritzelbaugruppe (12) umgreift.

16. Adapter (26) zum Anbringen einer Ritzelbaugruppe (12) an einem Antreiber (16) nach einem der Ansprüche 1 bis 14 bei einer Mehrfach-Ritzelanordnung (10) nach Anspruch 15, wobei der Adapter (26) zum axialen Fixieren der Ritzelbaugruppe (12) an dem Antreiber (16) mit einem ersten Kopplungsabschnitt (28) ausgebildet ist, über den er an einer Außengewindeformation (22) des Antreibers (16) anbringbar ist, und wobei der Adapter (26) mit einem zweiten Kopplungsabschnitt (34) ausgebildet ist, mit dem er mit der Ritzelbaugruppe (12) gekoppelt oder koppelbar ist.

17. Adapter (26) nach Anspruch 16,
**dadurch gekennzeichnet,**
**dass** der Adapter (26) im Bereich seines ersten Kopplungsabschnitts (28) oder/und im Bereich seines zweiten Kopplungsabschnitts (34) mit einer Passfläche (110, 112) zur radialen oder/und axialen Positionierung relativ zur Ritzelbaugruppe (12) und zum Antreiber (16) ausgebildet ist.

18. Adapter (26) nach Anspruch 17,
**dadurch gekennzeichnet,**
**dass** die Passfläche (110, 112) von einem an dem Adapter (26) angebrachten Kunststoffkörper (100) gebildet ist.

19. Adapter (26) nach Anspruch 18,
**dadurch gekennzeichnet,**
**dass** der Kunststoffkörper (100) wenigstens einen Kunststoffring (102, 104) umfasst, der an den Adapter (26) angespritzt ist, vorzugsweise sich durch Durchbrüche (106) in dem Adapter (26) hindurch erstreckt.

20. Hinterrad-Achsanordnung für ein Fahrrad mit
- einer Hinterradachse, die zur Befestigung an einem Fahrradrahmen ausgebildet ist,
- einen auf der Hinterachse drehbar gelagerten Nabenkörper,
- eine mit einer Antriebskette zusammenwirkenden Mehrfach-Ritzelanordnung (10) mit einem Antreiber (16) nach einem der Ansprüche 1 bis 14, und
- eine Drehmomentübertragungsanordnung zum richtungsselektiven Übertragen eines Drehmoments von der Mehrfach-Ritzelanordnung (10) zu dem Nabenkörper, um den Nabenkörper anzutreiben.

## Claims

1. Driver (16) for mounting on a rear-wheel axle of a bicycle, wherein the driver is designed so that a sprocket assembly (12), on which are provided a plurality of sprockets (141-1410) with different numbers of teeth, can be fitted thereon, wherein the driver (16) comprises:
- a torque-absorption formation (17) for torquetransmitting coupling to the sprocket assembly (12),
- a positioning portion (25) for positioning the sprocket assembly in the radial direction,
- an externally threaded formation (22), on to which can be screwed an adapter (26) for fixing the sprocket assembly (12) axially, and
- an output formation (18) for transmitting a torque to a hub arrangement of a rear-wheel axle of a bicycle,
**characterized**
**in that** the externally threaded formation (22) extends between the torque-absorption formation (17) and the positioning portion (25).

2. Driver (16) according to Claim 1,
**characterized by** a guide portion (23), which is arranged between the torque-absorption formation (17) and the positioning portion (25).

3. Driver (16) according to Claim 1 or 2, **characterized by** an axial stop (19) for the sprocket assembly (12), said stop being formed adjacent to the torque-absorption formation (17).

4. Driver (16) according to one of Claims 1 to 3, **characterized**
**in that** the torque-absorption formation (17) extends merely over a fraction of the axial length of the driver (16) between the axial stop (19) and the free end of the positioning portion (25), preferably over a fraction which is smaller than a quarter, particularly preferably smaller than a fifth, of said axial length of the driver (16).

5. Driver (16) according to Claim 4,
**characterized**
**in that** the fraction corresponds essentially to the axial length of the corresponding torque-transmission formation of the sprocket assembly.

6. Driver (16) according to one of the preceding claims,
**characterized**
**in that** the externally threaded formation (22) is directly adjacent to the torque-absorption formation (17).

7. Driver (16) according to one of Claims 2 to 6, **characterized**
**in that** the guide portion (23) is formed by an essentially cylindrical or slightly conical outer surface.

8. Driver (16) according to one of Claims 2 to 7, **characterized**
**in that** the guide portion (23) has a maximum external diameter which is smaller than that of the torque-absorption formation (17) and of the externally threaded formation (22).

9. Driver (16) according to one of Claims 2 to 8, **characterized**
**in that** the positioning portion (25) is provided at an end remote from the torque-absorption formation (17) and is formed with an external diameter which is smaller than the external diameter of the guide portion (23).

10. Driver (16) according to Claim 9,
**characterized**
**in that** that end of the driver (16) which is remote from the torque-absorption formation (17) is designed to accommodate a bearing (55).

11. Driver (16) according to one of the preceding claims,
**characterized**
**in that** an internal-diameter portion (57) for accommodating an enlarged-diameter bearing (55) is formed at an end remote from the torque-absorption formation (17).

12. Driver (16) according to Claim 10 or 11,
**characterized**
**in that** the positioning portion (25) comprises a fraction of the outer circumferential surface of the bearing (55) which projects axially beyond the driver (16), or it is formed thereby.

13. Driver (16) according to one of the preceding claims,
**characterized**
**in that**, at its end in the vicinity of the torque-absorption formation, the driver (16) is designed with an internal-diameter portion for accommodating a bearing.

14. Driver (16) according to one of the preceding claims,
**characterized by** the output formation (18), which is formed at the end in the vicinity of the torque-absorption formation (17), for the purpose of transmitting a torque to a hub arrangement of the rear-wheel axle (11) of the bicycle.

15. Multiple sprocket arrangement (10), having a plurality of sprockets (141-1410) with different numbers of teeth, for mounting on a rear-wheel axle of a bicycle, comprising
- a sprocket assembly (12), on which at least some of the plurality of the sprockets (141-1410) are provided,
and which is, or can be, connected in a torquetransmitting manner to a torque-absorption formation (17) of a driver (16) according to one of the preceding claims, and
- an adapter (26) which, for fixing the sprocket assembly (12) axially on the driver (16), can be, or is, screwed on to an externally threaded formation (22) of the driver (16) according to one of the preceding claims, via a first coupling portion (28), such that the adapter (26) engages around the driver (16) in the axial region of at least one sprocket of the sprocket assembly (12).

16. Adapter (26) for fitting a sprocket assembly (12) on a driver (16) according to one of Claims 1 to 14 in a multiple sprocket arrangement (10) according to Claim 15, wherein the adapter (26) is designed for fixing the sprocket assembly (12) axially on the driver (16) by way of a first coupling portion (28), via which the adapter can be fitted on an externally threaded formation (22) of the driver (16), and wherein the adapter (26) is designed with a second coupling portion (34), by way of which it is, or can be, coupled to the sprocket assembly (12).

17. Adapter (26) according to Claim 16,
**characterized**
**in that**, in the region of its first coupling portion (28) and/or in the region of its second coupling portion (34), the adapter (26) is designed with a mating surface (110, 112) for radial and/or axial positioning relative to the sprocket assembly (12) and to the driver (16).

18. Adapter (26) according to Claim 17,
**characterized**
**in that** the mating surface (110, 112) is formed by a plastic body (100), which is fitted on the adapter (26).

19. Adapter (26) according to Claim 18,
**characterized**
**in that** the plastic body (100) comprises at least one plastic ring (102, 104), which is injection moulded on to the adapter (26), and preferably extends through through-passages (106) in the adapter (26).

20. Rear-wheel-axle arrangement for a bicycle, having
- a rear-wheel axle, which is designed to be fastened on a bicycle frame,
- a hub body, which is mounted in a rotatable manner on the rear axle,
- a multiple sprocket arrangement (10) having a driver (16) according to one of Claims 1 to 14, said multiple sprocket arrangement interacting with a drive chain, and
- a torque-transmission arrangement for the direction-selective transmission of a torque from the multiple sprocket arrangement (10) to the hub body, in order to drive the hub body.

## Revendications

1. Dispositif d'entraînement (16) pour le montage sur un essieu de roue arrière d'une bicyclette, le dispositif d'entraînement étant réalisé en vue du montage d'un module de pignons (12) sur lequel est prévue une pluralité de pignons (141-1410) ayant des nombres de dents différents, le dispositif d'entraînement (16) comprenant :
- une formation de réception de couple (17) pour l'accouplement avec transmission de couple au module de pignons (12),
- une portion de positionnement (25) pour le positionnement du module de pignons dans la direction radiale,
- une formation de filetage extérieur (22) sur laquelle peut être vissé un adaptateur (26) pour la fixation axiale du module de pignons (12), et
- une formation de prise de force (18) pour le transfert d'un couple à un agencement de moyeu d'un essieu de roue arrière d'une bicyclette,
**caractérisé en ce que**
la formation de filetage extérieur (22) s'étend entre la formation de réception de couple (17) et la portion de positionnement (25).

2. Dispositif d'entraînement (16) selon la revendication 1,
**caractérisé par** une portion de guidage (23) qui est disposée entre la formation de réception de couple (17) et la portion de positionnement (25).

3. Dispositif d'entraînement (16) selon la revendication 1 ou 2,
**caractérisé par** une butée axiale (19) pour le module de pignons (12), qui est réalisée à côté de la formation de réception de couple (17).

4. Dispositif d'entraînement (16) selon l'une quelconque des revendications 1 à 3,
**caractérisé en ce que**
la formation de réception de couple (17) s'étend seulement sur une portion partielle de la longueur axiale du dispositif d'entraînement (16) entre la butée axiale (19) et l'extrémité libre de la portion de positionnement (25), de préférence sur une portion partielle qui est inférieure à un quart, particulièrement préférablement qui est inférieure à un cinquième de cette longueur axiale du dispositif d'entraînement (16).

5. Dispositif d'entraînement (16) selon la revendication 4,
**caractérisé en ce que**
la portion partielle correspond essentiellement à la longueur axiale de la formation de transfert de couple correspondante du module de pignons.

6. Dispositif d'entraînement (16) selon l'une quelconque des revendications précédentes, **caractérisé en ce que**
la formation de filetage extérieur (22) est immédiatement adjacente à la formation de réception de couple (17).

7. Dispositif d'entraînement (16) selon l'une quelconque des revendications 2 à 6,
**caractérisé en ce que**
la portion de guidage (23) est formée par une surface extérieure essentiellement cylindrique ou légèrement conique.

8. Dispositif d'entraînement (16) selon l'une quelconque des revendications 2 à 7,
**caractérisé en ce que**
la portion de guidage (23) présente un plus petit diamètre extérieur maximal que la formation de réception de couple (17) et la formation de filetage extérieur (22).

9. Dispositif d'entraînement (16) selon l'une quelconque des revendications 2 à 8,
**caractérisé en ce**
**qu'**au niveau d'une extrémité éloignée de la formation de réception de couple (17) est prévue la portion de positionnement (25) qui est réalisée avec un plus petit diamètre extérieur que le diamètre extérieur de la portion de guidage (23).

10. Dispositif d'entraînement (16) selon la revendication 9,
**caractérisé en ce que**
l'extrémité éloignée de la formation de réception de couple (17) du dispositif d'entraînement (16) est réalisée pour recevoir un palier (55).

11. Dispositif d'entraînement (16) selon l'une quelconque des revendications précédentes,
**caractérisé en ce**
**qu'**au niveau d'une extrémité éloignée de la formation de réception de couple (17) est réalisée une portion de diamètre intérieur (57) pour recevoir un palier (55) de diamètre agrandi.

12. Dispositif d'entraînement (16) selon la revendication 10 ou 11,
**caractérisé en ce que**
la portion de positionnement (25) comprend ou est formée par une portion partielle de la surface périphérique extérieure du palier (55) qui fait saillie axialement depuis le dispositif d'entraînement (16).

13. Dispositif d'entraînement (16) selon l'une quelconque des revendications précédentes,
**caractérisé en ce que**
le dispositif d'entraînement (16) est réalisé au niveau de son extrémité proche de la formation de réception de couple avec une portion de diamètre intérieur pour recevoir un palier.

14. Dispositif d'entraînement (16) selon l'une quelconque des revendications précédentes,
**caractérisé par** la formation de prise de force (18) qui est réalisée au niveau de l'extrémité proche de la formation de réception de couple (17) pour transférer un couple à un agencement de moyeu de l'essieu de roue arrière (11) de la bicyclette.

15. Agencement de pignons multiples (10) comprenant une pluralité de pignons (141-1410) avec des nombres de dents différents, pour le montage sur un essieu de roue arrière d'une bicyclette, comprenant :
- un module de pignons (12) sur lequel est prévue au moins une partie de la pluralité de pignons (141-1410),
et qui est ou peut être connecté par transmission de couple à une formation de réception de couple (17) d'un dispositif d'entraînement (16) selon l'une quelconque des revendications précédentes, et
- un adaptateur (26) qui est ou peut être vissé pour la fixation axiale du module de pignons (12) au dispositif d'entraînement (16) sur une formation de filetage extérieur (22) du dispositif d'entraînement (16) selon l'une quelconque des revendications précédentes par le biais d'une première portion d'accouplement (28) de telle sorte que l'adaptateur (26) viennent en prise autour du dispositif d'entraînement (16) dans la région axiale d'au moins un pignon du module de pignons (12).

16. Adaptateur (26) pour le montage d'un module de pignons (12) sur un dispositif d'entraînement (16) selon l'une quelconque des revendications 1 à 14, dans le cas d'un agencement de pignons multiples (10) selon la revendication 15, l'adaptateur (26) étant réalisé pour la fixation axiale du module de pignons (12) sur le dispositif d'entraînement (16) avec une première portion d'accouplement (28) par le biais de laquelle il peut être monté sur une formation de filetage extérieur (22) du dispositif d'entraînement (16), et l'adaptateur (26) étant réalisé avec une deuxième portion d'accouplement (34) avec laquelle il est ou peut être accouplé au module de pignons (12).

17. Adaptateur (26) selon la revendication 16,
**caractérisé en ce que**
l'adaptateur (26) est réalisé dans la région de sa première portion d'accouplement (28) et/ou dans la région de sa deuxième portion d'accouplement (34) avec une surface d'ajustement (110, 112) pour le positionnement radial et/ou axial par rapport au module de pignons (12) et par rapport au dispositif d'entraînement (16).

18. Adaptateur (26) selon la revendication 17,
**caractérisé en ce que**
la surface d'ajustement (110, 112) est formée par un corps en plastique (100) monté sur l'adaptateur (26).

19. Adaptateur (26) selon la revendication 18,
**caractérisé en ce que**
le corps en plastique (100) comprend au moins une bague en plastique (102, 104) qui est surmoulée sur l'adaptateur (26), de préférence qui s'étend à travers des orifices (106) dans l'adaptateur (26).

20. Agencement d'essieu de roue arrière pour une bicyclette, comprenant
- un essieu de roue arrière qui est réalisé pour la fixation sur un cadre de bicyclette,
- un corps de moyeu supporté à rotation sur l'essieu arrière,
- un agencement de pignons multiples (10) coopérant avec une chaîne d'entraînement, avec un dispositif d'entraînement (16) selon l'une quelconque des revendications 1 à 14, et
- un agencement de transfert de couple pour le transfert, à sélectivité directionnelle, d'un couple de l'agencement de pignons multiples (10) au corps de moyeu, afin d'entraîner le corps de moyeu.
